# Europäisches Patentamt

# European Patent Office

# Office européen des brevets

(19)

(11) Veröffentlichungsnummer: **0 226 013 B1**

(12) **EUROPÄISCHE PATENTSCHRIFT**

(45) Veröffentlichungstag der Patentschrift:
05.07.89

(51) Int. Cl.⁴: **B 60 S 1/38**

(21) Anmeldenummer: **86115137.1**

(22) Anmeldetag: **31.10.86**

(54) Wischblatt für eine Wischvorrichtung für Scheiben von Kraftfahrzeugen.

(30) Priorität: **12.12.85 DE 3543850**

(43) Veröffentlichungstag der Anmeldung:
**24.06.87 Patentblatt 87/26**

(45) Bekanntmachung des Hinweises auf die Patenterteilung:
**05.07.89 Patentblatt 89/27**

(84) Benannte Vertragsstaaten:
**DE FR GB IT SE**

(56) Entgegenhaltungen:
EP-A- 0 120 261
DE-A- 3 119 702
DE-A- 3 424 729
FR-A- 2 051 329
FR-A- 2 556 297
GB-A- 1 035 798

PATENT ABSTRACTS OF JAPAN, Band 8, Nr. 128
(M-302)[1565], 14. Juni 1984; & JP-A-59 32 545 (NIPPON
DENSO K.K.) 22.02.1984

(73) Patentinhaber: **BAYERISCHE MOTOREN WERKE
Aktiengesellschaft, Postfach 40 02 40 Petuelring 130 -
AJ-36, D-8000 München 40 (DE)**

(72) Erfinder: **Martin, Ronny, Alb. Schweitzer Strasse 54,
D-8025 Unterhaching (DE)**
Erfinder: **Heimrath, Michael, Dachauer Strasse 11,
D-8080 Fürstenfeldbruck (DE)**

(74) Vertreter: **Dexheimer, Rolf, Bayerische Motoren Werke
Aktiengesellschaft Postfach 40 02 40 Petuelring 130 -
AJ-31, D-8000 München 40 (DE)**

## Beschreibung

Die Erfindung bezieht sich auf ein Wischblatt nach dem Oberbegriff des Patentanspruchs 1. Bei einem bekannten Wischblatt dieser Art (DE-A-3 139 445) ist die Windabweisleiste an der die Wischleiste verstärkenden Federschiene angeformt oder angebracht. Dies hat den Nachteil, daß das aus mehreren Bügeln gebildete Traggestell in den hinsichtlich des Anpreßdrucks auf die Scheibe kritischen Wischpositionen des Wischblatts stark von der durch die Windschutzscheibe abgelenkten Luft durchströmt wird. Wie in der DE-A-2 346 100 ausgeführt, ist eine besonders kritische Wischzone derjenige seitliche Randbereich einer Windschutzscheibe, in dem das Wischblatt bei seiner Umkehrbewegung ungefähr parallel zum seitlichen Rand verläuft.

Ist die Windabweisleiste im wesentlichen nur in Höhe der Wischleiste angeordnet (DE-A-3 139 445 oder DE-A-3 430 156), so liegt sie mit einem großen Teil ihrer wirksamen Fläche noch in der Grenzschicht (ca. 20 mm) der Luftströmung, was ihre Wirksamkeit herabsetzt. Das Traggestell liegt dagegen schon oberhalb dieser Grenzschicht und wird mit einer hohen Strömungsgeschwindigkeit durchströmt. Dies bedingt in der kritischen Wischzone eine hohe Verwirbelung und einen vermehrten Auftrieb des Wischblatts, so daß die Wischleistung insbesondere bei hohen Geschwindigkeiten nicht befriedigt. Da ferner beim Wischblatt nach der DE-A-3 139 445 keine Durchströmung (Absaugung) von dem vor der Wischleiste liegenden Bereich in den hinter dieser Leiste liegenden Bereich möglich ist, bildet sich vor der Leiste ein hoher, das Abheben wiederum begünstigender Druck aus. Der hinter der Windabweisleiste entstehende Unterdruck kann nur an relativ kleinen Teilflächen wirksam werden und daher nur einen allenfalls minimalen Beitrag zum Erhöhen des Anpreßdruckes leisten.

Aus der DE-B-1 780 611 ist es zwar schon bekannt, den Hauptbügel eines Wischblatts als Windleitvorrichtung auszubilden, doch hat dieser Hauptbügel von den Nebenbügeln und der Wischleiste einen so großen Abstand, daß es unterhalb des Hauptbügels zu einer starken Durchströmung des Wischblatts mit den weiter oben erläuterten Nachteilen kommt.

Der Erfindung liegt die Aufgabe zugrunde, ein Wischblatt der eingangs genannten Gattung zu schaffen, mit dem das Wischergebnis in den kritischen Wischbereichen einer Windschutzscheibe auch bei hohen Fahrgeschwindigkeiten befriedigt und mit dem insbesondere nicht durch die Luftströmung verursachter Auftrieb die Anpreßkraft des Wischblatts auf die Scheibenoberfläche vermindert.

Diese Aufgabe wird erfindungsgemäß mit einem Wischblatt nach dem Oberbegriff des Patentanspruchs 1 durch die im Kennzeichen dieses Patentanspruchs angegebenen Merkmale gelöst. Dadurch, daß die Windabweisleiste im Querschnitt von ihrem nahe an die Scheibe reichenden vorderen unteren Abschnitt durchgehend bis in Anströmrichtung hinter das Traggestell geführt ist, liegt einerseits das gesamte Traggestell im sogenannten Totwassergebiet. Andererseits bildet sich auf der gesamten in Anströmrichtung rückwärtigen Fläche der Windabweisleiste ein starker Unterdruck aus, dessen zur Scheibenoberfläche hin wirkende Druckkraftkomponente den Anpreßdruck zur Scheibe erhöht. Die Abrißkante am oberen Rand der Windabweisleiste führt auch auf der in Anströmrichtung vorderen Fläche der Windabweisleiste zu einer Druckverteilung, bei der der Überdruck überwiegt und nur ganz oben, sehr nahe an der Abrißkante ein schmaler Unterdruckbereich ausgebildet wird. Auf diese Weise ist auch die auf die vordere Seite der Leiste wirkende resultierende, senkrecht zur Scheibenfläche wirkende Kraft nach unten gerichtet.

Die Erfindung und weitere vorteilhafte Ausgestaltungen der Erfindung, die Gegenstand von Unteransprüchen sind, sind im folgenden anhand eines in der Zeichnung dargestellten Ausführungsbeispiels näher erläutert. Es zeigen:

Fig. 1 eine schematisierte Darstellung des neuen Wischblatts;

Fig. 2 die sich an der Windabweisleiste dieses Wischblatts ausbildende Druckverteilung;

Fig. 3 die Vorderansicht eines Wischblatts und

Fig. 4 einen Schnitt nach der Linie IV-IV in Fig. 3.

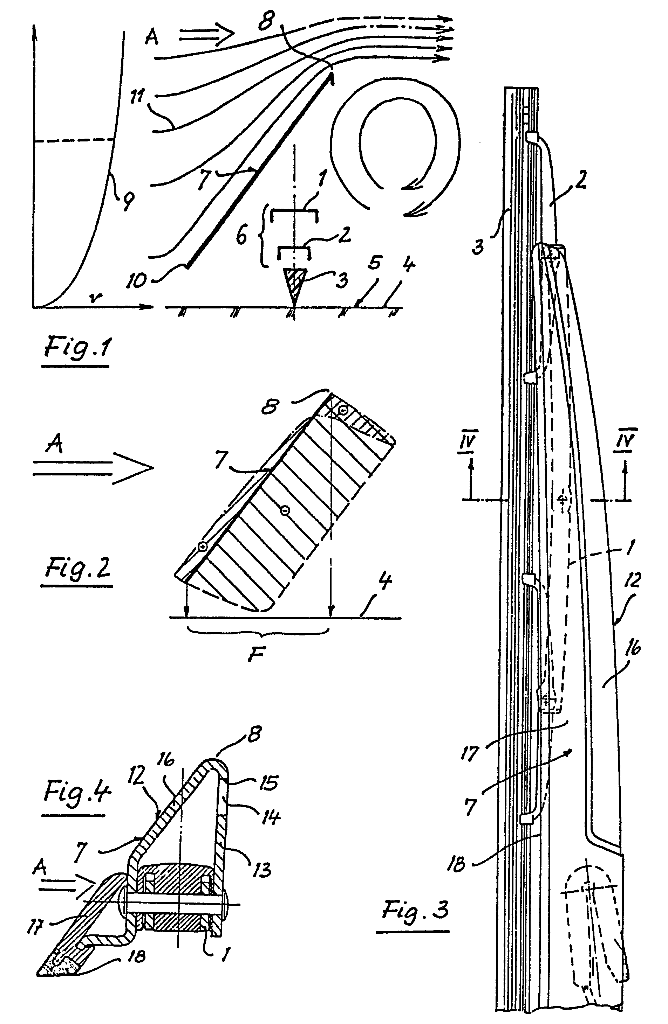

In der schematisierten Darstellung nach Fig. 1 ist mit 1 ein Hilfsbügel eines Wischblatts angedeutet, der über einen Krallenbügel 2 auf die Wischleiste 3 wirkt, um diese gegen die Oberfläche 4 der Scheibe 5 zu drücken. In Anströmrichtung A vor dem aus den erwähnten Bügeln gebildeten Traggestell 6 befindet sich eine Windabweisleiste 7, die im Querschnitt schräg nach vorne unten bis nahe an die Scheibe 5 reicht. Sie erstreckt sich zumindest annähernd über die Länge der Wischleiste 3.

Die Windabweisleiste 7 ist im Querschnitt mit ihrem oberen Rand schräg bis in Anströmrichtung A hinter das Traggestell 6 geführt und endet oben mit einer Abrißkante 8.

In Fig. 1 ist links horizontal die Strömungsgeschwindigkeit der Luft dargestellt, wie sie sich in einem gewissen Abstand vor dem Wischblatt ausbildet. Aus dem Verlauf 9 der Geschwindigkeit erkennt man, daß in einem geringen Abstandsbereich von der Scheibe nur eine sehr geringe Strömungsgeschwindigkeit vorhanden ist. Bis in diesen Abstandsbereich reicht die Unterkante 10 der Windabweisleiste 7. Der Abstand ist auf das geringste technische Maß reduziert. Er soll — ohne Kontakt der Unterkante 10 mit der Scheibe 5 — ein geringes technisch erforderliches Kippen des gesamten Wischblatts um eine Längsachse und eine bestimmte Verformung der Wischleiste 3 ermöglichen. Im Bereich der niedrigeren Grenzschichtströmung «dichtet» die mit geringer Geschwindigkeit strömende Luft die Unterkante 10 gewissermaßen gegen die Oberfläche 4 oder Scheibe 5 ab. Die im Abstandsbereich der Windabweisleiste 7 mit hoher Geschwindigkeit anströmende Luft 11 wird nach oben abgedrängt und erreicht bei der Abrißkante 8 ihre höchste Geschwindigkeit und ihren niedrigsten Strömungsdruck. Dieser niedrige Druck bildet sich auf der gesamten rückwärtigen Fläche der Windabweisleiste 7 aus. Er bildet sich ungefähr mit dem in Fig. 2 in strichlierten Linien dargestellten Druckverlauf aus. Die Druckverteilung bewirkt über die senkrecht auf die Oberfläche 4 der Scheibe projizierte Fläche F eine resultierende Druckkraft nach unten, die den Anpreßdruck des Wischblatts erhöht. Auf der Vorderseite der Windabweisleiste 7 entsteht über eine große Teilfläche eine positive in strichpunktierten Linien dargestellte Druckverteilung, die erst in einem sehr schmalen Randbereich nahe der Abrißkante 8 in Unterdruck übergeht. Da der Umkehrpunkt der Druckverteilung der Vorderseite sehr nahe an der Abrißkante 8 liegt, bildet sich insgesamt auf der Vorderseite der Windabweisleiste ein positiver resultierender Druck aus, dessen nach unten zur Oberfläche 4 gerichtete Kraftkomponente die aus dem Unterdruckbereich der Rückseite gebildete Druckkraft unterstützt. Die von der Rückseite herrührende Kraftkomponente zur Anpressung des Wischblatts gegen die Scheibe beträgt ein Mehrfaches der Kraftkomponente, die aus der Druckverteilung der Vorderseite resultiert.

Die Windabweisleiste 7 kann an dem Hauptbügel des Wischblatts angeordnet sein. Wie man in Fig. 4 erkennt, ist es vorteilhaft, die Windabweisleiste 7 in den Hauptbügel 12 zu integrieren. Bei dem bevorzugten Ausführungsbeispiel bestehen die Windabweisleiste 7 und der Hauptbügel aus einem Stück. Aus der Querschnittsdarstellung nach Fig. 4 ergibt sich, daß in Anströmrichtung A hinter der Abrißkante 8 an diese sich ein weitgehend senkrecht zur Oberfläche der Scheibe verlaufender Wandabschnitt 13 anschließt. Der Hauptbügel 12 hat demnach eine im wesentlichen V-förmige Querschnittsform, deren V-Spitze oben liegt und die Abrißkante 8 bildet. Man erkennt ferner, daß der senkrechte Wandabschnitt 13 Absaugöffnungen 14 aufweist, deren obere Ränder 15 vorzugsweise bis nahe an die Abrißkante 8 heranreichen. Auf diese Weise kann sich der in der Zone der Abrißkante 8 vorhandene Unterdruck besonders gut auf die rückwärtige Fläche der Windabweisleiste 7 fortpflanzen, so daß die oben erläuterten Wirkungen eintreten.

In Fig. 4 erkennt man schließlich noch, daß die Windabweisleiste 7 insgesamt aus einem schrägen Wandungsabschnitt 16 und einer an dessen unteren Rand angesetzten Verlängerungsleiste 17 gebildet sein kann. Die Verlängerungsleiste 17 trägt ihrerseits an ihrer unteren Kante eine Randleiste 18 aus etwas weicherem Material, um bei einem eventuellen Kontakt mit der Scheibe 5 deren Oberfläche 4 nicht zu beschädigen.

**Patentansprüche**

1. Wischblatt für eine Wischvorrichtung für Scheiben (5) von Kraftfahrzeugen, mit einem aus einem Hauptbügel (12) mit mehreren Hilfsbügeln (2) gebildeten Traggestell (6) für eine Wischleiste (3) und einer sich in etwa über die Länge der Wischleiste (3) erstreckenden Windabweisleiste (7), die in Anströmrichtung (A) vor der Wischleiste (3) schräg nach vorne unten (10) bis nahe an die Scheibe (5) reicht, dadurch gekennzeichnet, daß die Windabweisleiste (7) im Querschnitt schräg bis in Anströmrichtung (A) so hinter das Traggestell (6) geführt ist und oben in einer Abrißkante (8) endet, daß der an der Abrißkante (8) erzeugte Unterdruck auf der gesamten Rückseite der Windabweisleiste (7) wirksam wird.

2. Wischblatt nach Anspruch 1, dadurch gekennzeichnet, daß die Windabweisleiste (7) an dem Hauptbügel (12) angeordnet ist.

3. Wischblatt nach Anspruch 2, dadurch gekennzeichnet, daß die Windabweisleiste (7) in den Hauptbügel (12) integriert ist.

4. Wischblatt nach Anspruch 3, dadurch gekennzeichnet, daß die Windabweisseite (7) und der Hauptbügel (12) aus einem Stück bestehen.

5. Wischblatt nach Anspruch 4, dadurch gekennzeichnet, daß sich in Anströmrichtung (A) hinter der Abrißkante (8) an diese ein weitgehend senkrecht zur Oberfläche (4) der Scheibe (5) verlaufender Wandabschnitt (13) anschließt.

6. Wischblatt nach Anspruch 5, dadurch gekennzeichnet, daß der senkrechte Wandabschnitt (13) Absaugöffnungen aufweist.

7. Wischblatt nach Anspruch 6, dadurch gekennzeichnet, daß die oberen Ränder (15) der Absaugöffnungen (14) bis nahe an die Abrißkante (8) heranreichen.

**Claims**

1. A wiper blade for a means for wiping the windows (5) of motor vehicles and comprising a supporting frame (6) for a wiper strip (3) and made up of a main stirrup (12) and a number of auxiliary stirrups (2), the wiper blade also comprising a wind-deflecting strip (7) extending approximately over the length of the wiper strip (3) and extending in the direction (A) of oncoming flow obliquely forwards and downwards (10) in front of the wiper strip (3) to near the window (5), chacacterised in that the cross-section of the wind-deflecting strip (7) is guided downwards in the direction (A) of oncoming flow to behind the supporting frame (6) and ends at the top in a sharp edge (8), so that the negative pressure produced at the sharp edge (8) operates over the entire rear side of the wind-deflecting strip (7).

2. A wiper blade according to claim 1, characterised in that the wind-deflecting strip (7) is disposed on the main stirrup.

3. A wiper blade according to claim 2, characterised in that the wind-deflecting strip (7) is incorporated in the main stirrup (12).

4. A wiper blade according to claim 3, characterised in that the wind-deflecting strip (7) and the main stirrup (12) are in one piece.

5. A wiper blade according to claim 4, characterised in that a wall portion (13) substantially perpendicular to the surface (4) of the window (5) is adjacent the sharp edge (8) and behind it in the direction (A) of oncoming flow.

6. A wiper blade according to claim 5, characterised in that the perpendicular wall portion (13) has suction openings.

7. A wiper blade according to claim 6, characterised in that the top edges (15) of the suction openings (14) extend to near the sharp edge (8).

## Revendications

1. Balai d'essuyage pour un dispositif d'essuyage pour vitres (5) de véhicules automobiles, comprenant un bâti support (6) pour une bande d'essuyage (3), formé d'un étrier principal (12) et de plusieurs étriers auxiliaires (2), et d'un déflecteur d'air (7) s'étendant approximativement sur la longueur de la bande d'essuyage (3), arrivant, devant la bande d'essuyage (3), dans le sens d'arrivée de l'écoulement (A), en biais vers l'avant et vers le dessous, jusqu'à proximité de la vitre (5), caractérisé en ce que le déflecteur (7) est guidé en biais, en section transversale, jusqu'à être ainsi derrière le bâti support (6) et termine au-dessus, en une arête en talon (8), en ce que la dépression produite sur l'arête en talon (8) est efficace sur le côté arrière du déflecteur d'air (7).

2. Balai d'essuyage selon la revendication 1, caractérisé en ce que le déflecteur d'air (7) est disposé sur l'étrier principal.

3. Balai d'essuyage selon la revendication 2, caractérisé en ce que le déflecteur d'air (7) est intégré dans l'étrier principal (12).

4. Balai d'essuyage selon la revendication 3, caractérisé en ce que le déflecteur d'air (7) et l'étrier principal (12) sont composés d'une seule pièce.

5. Balai d'essuyage selon la revendication 4, caractérisé en ce qu'une partie de paroi (13) se développant principalement perpendiculairement par rapport à la surface (4) de la vitre (5) se raccorde, dans le sens d'arrivée d'écoulement (A), derrière l'arête en talon (8), sur celle-ci.

6. Balai d'essuyage selon la revendication 5, caractérisé en ce que la partie de paroi perpendiculaire (13) présente des orifices d'aspiration.

7. Balai d'essuyage selon la revendication 6, caractérisé en ce que les bordures supérieures (15) des orifices d'aspiration (14) arrivent jusqu'à proximité de l'arête en talon (8).

Fig.1

Fig.2

Fig.4

Fig.3